# DEMANDE DE BREVET EUROPEEN

(11) **EP 1 276 044 A1**
(43) Date de publication de la demande: **15.01.2003**
(21) Numéro de dépôt: 02291737.1
(22) Date de dépôt: 10.07.2002
(51) Int. Cl.: G06F 9/445

(54) **Traitement informatique de données audiovisuelles**

(30) Priorité: 10.07.2001 FR 0109171
(71) Demandeur: Mondial Communication Systems, 75011 Paris (FR)
(72) Inventeur: Picoureix, Valère, 92240 Malakoff (FR); Radermacher, Marc, 69570 Dardilly (FR); Vidal, Régis, 38780 Estrablin (FR); Hure, Fabien, 771140 Nemours (FR)
(74) Mandataire: Breesé, Pierre

(57) **Abrégé**

La présente invention a pour objet un procédé de traitement de données multimédias pour la création d'une application numérique audiovisuelle, comportant :
- une première étape d'enregistrement
- une étape dynamique de construction d'une table d'instruction transitoire, caractérisé en ce que la première étape consiste en outre à procéder à l'enregistrement dans une base de données d'au moins un transformateur d'objets
- l'étape de construction comprenant une opération de vérification de la compatibilité entre un transformateur d'objets et les objets préalablement enregistrés dans ladite table transitoire, et dans l'affirmative, à appliquer la modification correspondante audits objets compatibles.

## Description

La présente invention concerne le domaine du traitement informatique de données audiovisuelles.

On connaît dans l'état de la technique le brevet européen EP643349 décrivant un procédé pour l'exécution d'une opération particulière de mandataire appelée par un client dans un système informatique de façon à réduire la quantité d'espace en mémoire requise par les mandataires du côté client, caractérisé par les étapes suivantes :
- l'accès à partir d'une première zone de la mémoire d'ordinateur à une première partie de code requise pour exécuter ladite opération de mandataire par appel d'un interpréteur de mandataire (158) pour exécuter ladite opération de mandataire, ledit interpréteur de mandataire (158) fournissant ladite première partie de code toutes les fois que ladite opération de mandataire est appelée, ladite première partie de code étant identifiée comme étant commune a une pluralité de différentes opérations de mandataire ;
- l'accès à partir d'une seconde zone de la mémoire d'ordinateur a une seconde partie du code requise pour exécuter ladite opération de mandataire, ladite seconde partie de code étant identifiée comme étant unique pour ladite opération particulière de mandataire, et ladite seconde partie de code étant stockée sous un format comprimé ; et
- l'exécution de ladite opération de mandataire au moment de l'exécution par interprétation desdites première et seconde parties de code sans code C++ explicite pour une procédure, un argument et une exception de ladite opération de mandataire.

L'invention vise à proposer un procédé de traitement de données audiovisuelles permettant de traiter des fichiers informatiques selon un langage spécifique, optimisé pour de telles applications.

Elle concerne selon son acception la plus générale un procédé de traitement de données multimédias pour la création d'une application numérique interactive audiovisuelle, comportant :
- une première étape d'enregistrement en mémoire résidente d'une bibliothèque de familles d'objets informatiques correspondant à des fonctionnalités audiovisuelles élémentaires [afficher une image, jouer un son,...] associées à des descripteurs, chaque famille comprenant au moins un objet, ainsi qu'un interpréteur,
- une étape dynamique de construction d'une table d'instruction transitoire, enregistrée en mémoire vive pendant la durée d'exécution de l'interprétation en cours, ladite opération consistant à pointer au moins une desdites familles, à vérifier la compatibilité de ladite famille avec ledit interpréteur, et dans l'affirmative, à enregistrer dans ladite table les descripteurs des objets de ladite famille,
caractérisé en ce que la première étape consiste en outre à procéder à l'enregistrement dans ladite base de données d'au moins un transformateur d'objets [un fichier numérique comprenant des routines de modifications des caractéristiques audiovisuelles d'un objet]
- l'étape de construction comprenant une opération de vérification de la compatibilité entre un transformateur d'objets et les objets préalablement enregistrés dans ladite table transitoire, et dans l'affirmative, à appliquer la modification correspondante audits objets compatibles.

Avantageusement, l'étape dynamique de construction de la table d'instruction transitoire consiste à enregistrer dans ladite table la totalité des objets informatiques et des transformateurs de la base de données de la mémoire résidante.

Selon une variante, l'étape dynamique de construction de la table d'instruction transitoire est exécutée à chaque réception d'un fichier d'exécution comprenant un bloc de commande et au moins un identifiant d'objet et le cas échéant d'au moins un transformateur d'objets, le procédé consistant à charger dans la table les objets et transformateurs d'objets correspondant auxdits identifiants.

De préférence, l'étape dynamique de construction de la table d'instruction consiste en outre en une opération de suppression de la table les objets et transformateurs préalablement enregistrés dans ladite table, et dont les identifiants ne sont pas contenus dans ledit fichier d'exécution.

Selon une autre variante, la vérification de la compatibilité consiste à comparer l'identifiant d'un descripteur de l'interpréteur contenu de la famille d'objet ou du transformateur, le descripteur de l'interpréteur en cours d'utilisation, et à autoriser l'enregistrement dans la table lorsque l'interpréteur détecte un identifiant valide.

Selon un mode de mise en oeuvre particulier, la vérification de la compatibilité consiste à comparer l'identifiant d'un descripteur d'une famille d'objets ou d'un transformateur et le contenu de l'interpréteur en cours d'utilisation, et à autoriser l'enregistrement dans la table lorsque l'interpréteur détecte un identifiant de famille ou de transformateur valide.

Selon un autre mode de mise en oeuvre, la vérification de la compatibilité comporte une étape de vérification entre un identifiant de capacité contenu dans un objet et l'identifiant de la capacité d'un transformateur ["capacité d'être affiché", "capacité d'être déplacé sur l'écran", "capacité d'être déplacé dans le temps"], et à procéder à l'adjonction d'information dans la table d'instruction, concernant l'objet par le transformateur en cas de vérification positive.

Avantageusement, la vérification de la compatibilité du fichier d'exécution consistant à vérifier si les identifiants des objets et transformateurs figurant dans ledit fichier d'exécution sont contenus dans la table chargée en mémoire vive, ou s'ils sont enregistrés dans la bibliothèque en mémoire résidante.

Selon un mode de réalisation particulier, le procédé selon l'invention comporte une étape de vérification du fichier consistant à rechercher si le fichier d'exécution comporte une clé valide.

Selon une variante particulière, il comporte une étape de vérification de la validité de l'interpréteur consistant à rechercher si le fichier d'exécution comporte une clé compatible avec le contenu du fichier d'exécution.

La présente invention sera mieux comprise à la lecture de la description qui suit, se référant aux dessins annexés relatifs à un exemple non limitatif de réalisation, où :

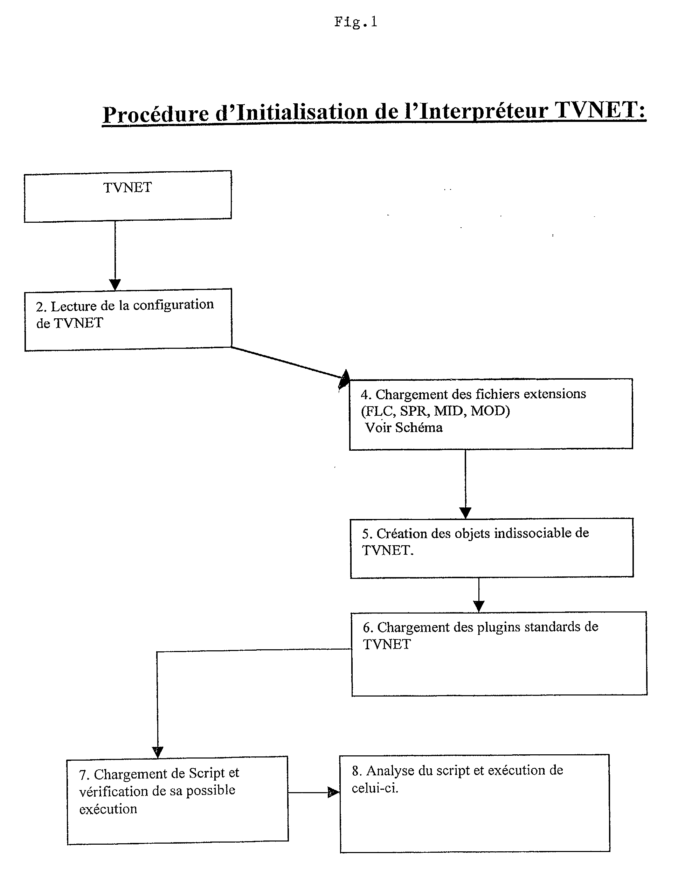

- la figure 1 représente le schéma d'une partie de la procédure d'initialisation de l'interpréteur pour la mise en oeuvre de l'invention

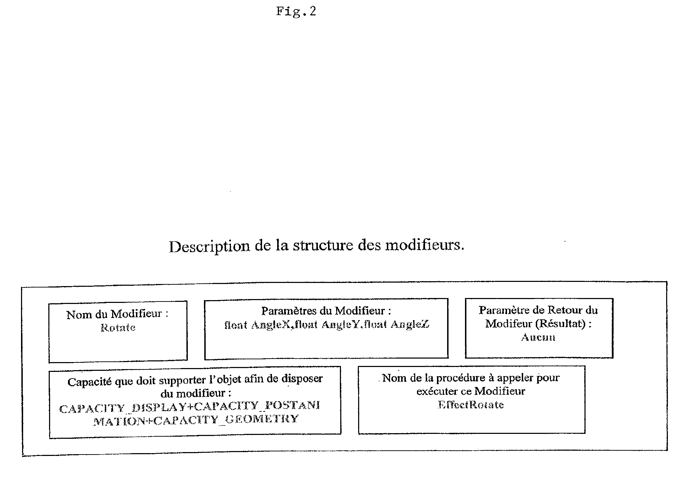

- la figure 2 représente une vue schématique de la structure des modifieurs,

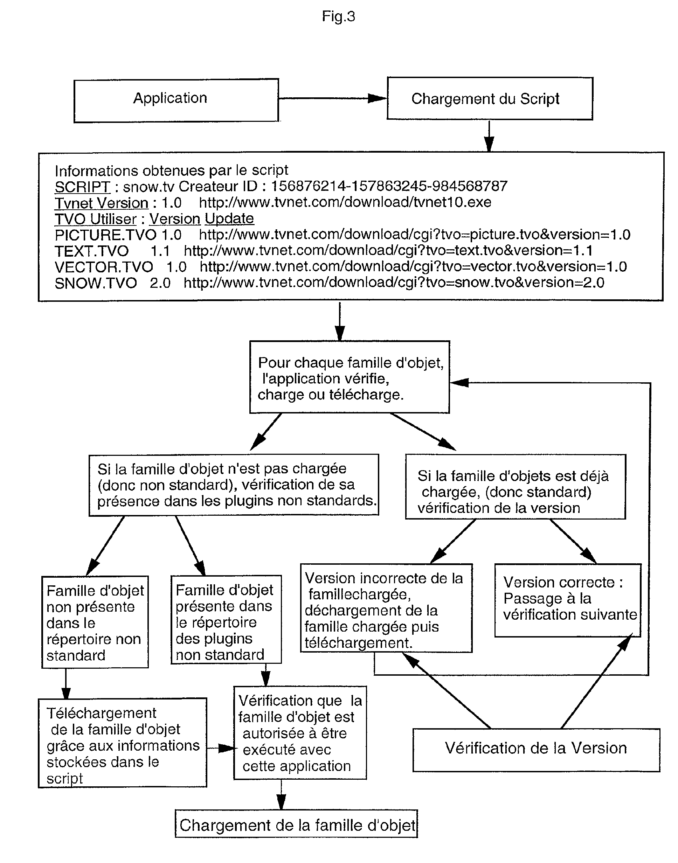

- la figure 3 représente une représentation schématique de l'analyse d'un script et le chargement des familles d'objets non standards.

La description qui suit expose un exemple non limitatif de mise en oeuvre de l'invention.

L'invention se traduit par une application informatique contenant un interpréteur dédié à l'exploitation d'un nouveau langage de description de données audiovisuelles.

Cette application réalise les traitements des fichiers informatiques :
- Lecture du fichier de configuration de l'application
- Chargement des exécutables auxquels pourront faire appel les instructions pour décoder un flux de données (par exemples décodage de formats audiovisuels).
- Création des objets indissociables
- Chargement en mémoire vive des familles d'objets standards
- Chargement du fichier d'entrée, ou "script"
- Analyse des fichiers d'entrée conformes audit langage
- Recherche dans une bibliothèque des familles d'objets non-standards nécessaires pour la restitution des données audiovisuelles.
- Chargement en mémoire vive des familles d'objets non-standards nécessaires pour la restitution des données audiovisuelles

La bibliothèque d'objets est classée par famille et contient différentes familles d'objets.

Ces objets comportent chacun une partie prédéfinie :
- son nom
- la capacité à accepter des modifieurs. Ces modifieurs exprimant soit des propriétés des objets, soit des actions, et comprenant les paramètres des instructions pouvant naître de l'association d'un objet et d'un modifieur.

Ils comportent optionnellement une partie variable, paramétrable pour la communication avec d'autres objets ou ressources informatiques.

A titre d'exemple, les objets sonores comportent une partie variable de détection de la présence d'une carte sonore. En l'absence de cette dernière, cet objet ne sera pas chargé par l'application.

Le procédé selon l'invention permet de créer instantanément les instructions d'un langage informatique.

Il rend donc aussi possible la mise à jour, y compris à distance, du logiciel interpréteur du langage sans qu'il soit nécessaire de relancer le fichier exécutable.

Ce procédé permet l'optimisation des ressources hardware utilisées et notamment de la RAM puisque les instructions ne sont créées qu'au moment ou elles sont nécessaires.

Ce procédé permet de créer de nouvelles instructions se rapportant à des objets existant sans qu'il soit nécessaire de modifier le code du (ou des) module(s) concernant ces objets.

Le logiciel selon l'invention est un logiciel modulaire composé d'un logiciel exécutable et d'un ensemble de modules appelés familles d'objets.

### Description du procédé :

Lorsque l'application est exécutée, elle recherche toutes les familles d'objets présentes et, pour chaque famille trouvée, vérifie que cette dernière est autorisée (système de double clé) à fonctionner avec l'application (ou avec la version de l'application concernée).

Si la famille d'objets n'est pas autorisée, elle est ignorée.

Les familles d'objets autorisées sont chargées dans la mémoire vive (RAM) du système et communiquent à l'application selon l'invention :
- Le (ou les) objet(s) qu'elles contiennent.
- Les « **modifieurs privés**» (spécifiques à un objet).
- Les « **Modififieurs comportementaux** » (communs à une catégorie d'objets).
- Ainsi les modifieurs privés seront associés en temps réel, et seulement si besoin, (sollicitation par un script) aux objets qui ont la capacité de les accepter.

Cela permet non seulement de ne construire que les instructions nécessaires à une application donnée, et donc d'optimiser au maximum l'utilisation des ressources hardware, mais cela rend aussi possible l'enrichissement du système par création de nouvelles instructions provenant de la rencontre entre un modifieur comportemental crée pour un objet et les autres objets de même catégorie.

Lors de la création d'un modifieur, le développeur doit en effet décider s'il s'agit d'un modifieur spécifique ou d'un modifieur comportemental. Dans ce dernier cas, il doit définir la catégorie d'objets à laquelle ce comportement pourra s'appliquer (voir schéma en annexe).

### Création d'une instruction de l'application selon l'invention

L'application associe dans un premier temps chaque objet chargé à ses modifieurs privés éventuels. De chaque association né une instruction.

Puis, l'application cherche à associer l'ensemble des modifieurs comportementaux à l'ensemble des objets présent en comparant les capacités de chaque objet aux capacités de chaque modifieur comportemental. Seuls sont créées les instructions associant un objet et un modifieur comportemental aux capacités compatibles.

### Création de la famille des objets indissociables

L'application selon l'invention comprend des objet omniprésents et indissociables nécessaires à son bon fonctionnement.

### Chargement des familles d'objets standards

Après avoir chargé les "objets indissociables", l'application selon l'invention charge les familles d'objets standards, c'est-à-dire celles qui sont le plus souvent utilisées. Les familles d'objets non standards ne seront chargées que lorsqu'elles sont nécessaires, c'est-à-dire après analyse du script.

### Analyse du Script

L'application selon l'invention charge maintenant le "script" (c'est-à-dire une liste séquentielle d'instructions) passé en ligne de commande. Il y a une succession d'étapes et de vérifications avant la compilation et l'exécution du script.

### Première Etape :

L'application charge le script et valide sa capacité à s'exécuter. Par exemple :
- Version de l'application utilisée pour créer le script.
- Listing de toutes les familles d'objets utilisées dans le script. Pour chaque famille d'objets sont indiqués : son nom, la version utilisée, l'identifiant de la famille (numéro de série si plusieurs familles portent le même nom), et l'adresse Internet pour télécharger la ou les familles nécessaire(s) pour exécuter le script ou mettre à jour une famille.
- Numéro d'identifiant de l'auteur du script.

### Deuxième Etape :

L'application collecte toutes ces informations et les compare avec les données présentes. Elle vérifie que la version de l'application est correcte. Si elle ne l'est pas elle va télécharger la dernière version de l'application. Une fois la nouvelle version installée l'application reprend au début de la procédure d'initialisation.

Puis, l'application vérifie une à une chaque famille d'objets utilisée par le script et vérifie que la version présente sur la machine est correcte. Si la version de la famille d'objets n'est pas correcte alors l'application va télécharger la bonne version et met à jour le système.

l'application vérifie que chaque famille d'objets a le droit de fonctionner avec le script courant (protocole de vérification).

Une fois toutes ces étapes effectuées, le script est exécuté. Puis, toutes les familles non-standard sont déchargées.

## Revendications

1. Procédé de traitement de données multimédias pour la création d'une application numérique audiovisuelle, comportant :
- une première étape d'enregistrement en mémoire résidente d'une bibliothèque de familles d'objets informatiques correspondant à des fonctionnalités audiovisuelles élémentaires [afficher une image, jouer un son,...] associées à des descripteurs, chaque famille comprenant au moins un objet, ainsi qu'un interpréteur,
- une étape dynamique de construction d'une table d'instruction transitoire, enregistrée en mémoire vive pendant la durée d'exécution de l'interprétation en cours, ladite opération consistant à pointer au moins une desdites familles, à vérifier la compatibilité de ladite famille avec ledit interpréteur, et dans l'affirmative, à enregistrer dans ladite table les descripteurs des objets de ladite famille,
**caractérisé en ce que** la première étape consiste en outre à procéder à l'enregistrement dans ladite base de données d'au moins un transformateur d'objets [un fichier numérique comprenant des routines de modifications des caractéristiques audiovisuelles d'un objet]
- l'étape de construction comprenant une opération de vérification de la compatibilité entre un transformateur d'objets et les objets préalablement enregistrés dans ladite table transitoire, et dans l'affirmative, à appliquer la modification correspondante audits objets compatibles.

2. Procédé de traitement de données multimédias selon la revendication 1, **caractérisé en ce que** l'étape dynamique de construction de la table d'instruction transitoire consiste à enregistrer dans ladite table la totalité des objets informatiques et des transformateurs de la base de données de la mémoire résidante.

3. Procédé de traitement de données multimédias selon la revendication 1, **caractérisé en ce que** l'étape dynamique de construction de la table d'instruction transitoire est exécutée à chaque réception d'un fichier d'exécution comprenant un bloc de commande et au moins un identifiant d'objet et le cas échéant d'au moins un transformateur d'objets, le procédé consistant à charger dans la table les objets et transformateurs d'objets correspondant auxdits identifiants.

4. Procédé de traitement de données multimédias selon la revendication 3, **caractérisé en ce que** l'étape dynamique de construction de la table d'instruction comporte en outre une opération de suppression de la table les objets et transformateurs préalablement enregistrés dans ladite table, et dont les identifiants ne sont pas contenus dans ledit fichier d'exécution.

5. Procédé de traitement de données multimédias selon l'une au moins des revendications précédentes, **caractérisé en ce que** la vérification de la compatibilité consiste à comparer l'identifiant d'un descripteur de l'interpréteur contenu dans la famille d'objet ou du transformateur, le descripteur de l'interpréteur en cours d'utilisation, et à autoriser l'enregistrement dans la table lorsque l'interpréteur détecte un identifiant valide.

6. Procédé de traitement de données multimédias selon l'une au moins des revendications précédentes, **caractérisé en ce que** la vérification de la compatibilité consiste à comparer l'identifiant d'un descripteur d'une famille d'objets ou d'un transformateur et le contenu de l'interpréteur en cours d'utilisation, et à autoriser l'enregistrement dans la table lorsque l'interpréteur détecte un identifiant de famille ou de transformateur valide.

7. Procédé de traitement de données multimédias selon l'une au moins des revendications précédentes, **caractérisé en ce que** la vérification de la compatibilité comporte une étape de vérification entre un identifiant de capacité contenu dans un objet et l'identifiant de la capacité d'un transformateur ["capacité d'être affiché", "capacité d'être déplacé sur l'écran", "capacité d'être déplacé dans le temps"], et à procéder, en cas de vérification positive, à l'adjonction d'informations dans la table d'instruction, associant l'objet et le transformateur.

8. Procédé de traitement de données multimédias selon l'une au moins des revendications précédentes, **caractérisé en ce que** la vérification de la compatibilité fichier d'exécution, consistant à vérifier si les identifiants des objets et transformateurs figurant dans ledit fichier d'exécution, sont contenus dans la table chargée en mémoire vive, ou s'ils sont enregistrés dans la bibliothèque en mémoire résidante.

9. Procédé de traitement de données multimédias selon la revendication 8, **caractérisé en ce qu'**il comporte une étape de chargement, depuis un serveur, les familles d'objets manquantes.

10. Procédé de traitement de données multimédias selon la revendication 8, **caractérisé en ce qu'**il comporte une étape de vérification du fichier consistant à rechercher si le fichier d'exécution comporte une clé valide.

11. Procédé de traitement de données multimédias selon la revendication 8, **caractérisé en ce qu'**il comporte une étape de vérification de la validité de l'interpréteur consistant à rechercher si le fichier d'exécution comporte une clé compatible avec le contenu du fichier d'exécution.
